Europäisches Patentamt

European Patent Office

Office européen des brevets

(19)

(11) Numéro de publication: **0 239 505**
**A1**

(12)

# DEMANDE DE BREVET EUROPEEN

(21) Numéro de dépôt: **87400698.4**

(22) Date de dépôt: **27.03.87**

(51) Int. Cl.⁴: **G 07 F 7/08**
G 07 B 15/00, G 07 C 15/00

(30) Priorité: **28.03.86 FR 8604553**

(43) Date de publication de la demande:
**30.09.87 Bulletin 87/40**

(84) Etats contractants désignés:
**AT BE CH DE ES GB IT LI NL SE**

(71) Demandeur: **Desgigot, François**
**46 rue de la Butte aux Cailles**
**F-75013 Paris (FR)**

(72) Inventeur: **Desgigot, François**
**46 rue de la Butte aux Cailles**
**F-75013 Paris (FR)**

(74) Mandataire: **Tanguy, Gilbert André et al**
**c/o Harlé-Phélip 21, rue de la Rochefoucauld**
**F-75009 Paris (FR)**

(54) **Procédé d'éxécution de transactions et microordinateur pour sa mise en oeuvre, notamment comme titre de transport ou bulletin de jeu.**

(57) L'invention concerne l'exécution de transactions.

Elle se rapporte à un microordinateur construit autour d'une unité de traitement (10) et ayant un dispositif de saisie (12) relié à l'unité de traitement par l'intermédiaire d'un dispositif (44) permettant le maintien en l'état du microordinateur afin que des éléments d'une transaction, préalablement introduits, soient conservés indéfiniment, c'est-à-dire jusqu'à une validation qui peut soit supprimer ce maintien en l'état, soit le prolonger.

Application aux titres de transport et aux bulletins de jeux tels que le loto et le tiercé.

FIG 1

EP 0 239 505 A1

## Description

" Procédé d'exécution de transactions et microordinateur pour sa mise en oeuvre, notamment comme titre de transport ou bulletin de jeu "

La présente invention concerne un procédé d'exécution de transactions à l'aide d'un support matériel qui est avantageusement un microordinateur, de préférence facilement transportable.

Bien qu'elle ait d'autres applications, l'invention est décrite dans la suite en référence à l'utilisation d'un microordinateur de très faible dimension puisqu'il comporte, dans le format d'une carte de crédit habituelle, un véritable microordinateur comprenant une unité de traitement, un dispositif de saisie, un dispositif d'affichage, un dispositif d'entrée-sortie et une alimentation, de préférence sous forme d'une pile. Bien que de tels microordinateurs ne soient pas encore courants, leur utilisation est envisagée pour un avenir proche. Cependant, l'invention peut être mise en oeuvre avec des microordinateurs de plus grand encombrement, de préférence de type portatif.

Dans la suite du présent mémoire, on considère l'invention dans son application à des opérations de transport d'une part et à des opérations de jeux d'autre part.

La transaction appelée "délivrance d'un titre de transport" implique habituellement le calcul d'un montant d'après un mode de transport, une distance, une classe, un supplément ou une réduction éventuelle, etc., puis le paiement de ce montant et la remise d'un titre de transport. Cette transaction est habituellement réalisée à un guichet et implique souvent une attente à ce guichet.

Dans l'application à l'exécution de transactions de jeux, la prise d'un pari ou d'un pronostic implique des opérations de préparation du pronostic, de validation de celui-ci et de paiement de la somme correspondant à la transaction avec remise d'un titre représentatif de la transaction. Ces opérations sont aussi réalisées habituellement à un guichet ou, dans certains cas, à des terminaux auxquels chaque joueur effectue un certain nombre d'opérations. Ainsi, pendant que le joueur prépare sa combinaison, il occupe le terminal et le rend donc indisponible pour les autres joueurs. Ces derniers doivent donc aussi attendre.

L'invention concerne un procédé et un microordinateur permettant l'exécution de transactions d'une manière totalement automatique et ne nécessitant pratiquement aucune attente à un guichet ou au niveau d'un terminal, car l'occupation d'un tel terminal est extrêmement brève. L'invention permet l'exécution de toutes les opérations habituelles et permet soit l'édition d'un moyen de preuve, soit la mise du microordinateur à un état tel qu'il constitue lui-même le moyen de preuve.

On connaît déjà des appareils sous forme de microordinateurs portatifs, destinés à être utilisés dans des machines de vente, des jeux électroniques, des portillons d'accès à des trains ou des appareils de paiement de transport en autobus. Par exemple, la demande de brevet européen EP-A-0 057 602 décrit un tel "jeton électronique" permettant le paiement de divers services. Dans un tel appareil, une somme déterminée pour une transaction est affichée sur l'appareil, à l'aide d'un clavier, et la transaction est validée par un terminal convenable : ce dernier débite une somme dans le jeton et celui-ci est immédiatement disponible pour une autre transaction, pouvant mettre en oeuvre un programme différent.

Les documents DE-A-3 222 288, GB-A- 2 066 540, US-A-4 320 387 et EP-A-0 038 425 décrivent des appareils analogues dans lesquels un microordinateur est utilisé pour le débit d'un compte. Tous ces appareils permettent la préparation d'une transaction, puis son exécution par validation, l'appareil étant immédiatement libéré.

Ainsi, ces documents ne décrivent que des procédés comprenant la préparation d'une transaction, puis sa validation. Aucun d'eux ne décrit ni ne suggère d'opération de maintien en l'état, avant ou après la validation d'une transaction, ni sa libération de ce maintien en l'état. L'article de IBM Technical Disclosure Bulletin, vol. 27, n° 4A, p. 1999, indique qu'une machine à écrire électronique, ayant une mémoire de texte, peut être mise en mode d'inhibition afin que la composition d'un texte puisse être interrompue, puis poursuivie ultérieurement. A cet effet, la machine est commandée par une séquence particulière d'actionnement de touches. Elle est remise en fonctionnement par la même séquence. Une touche de fonction peut aussi être spécialement affectée à l'opération. Cette fonction d'inhibition est ainsi destinée à éviter la perte d'un travail déjà effectué. La suppression de l'inhibition assure simplement la remise du système dans l'état antérieur à cette inhibition. Ce document ne décrit ni ne suggère l'application d'une telle opération d'inhibition à d'autres domaines que la simple conservation de données déjà enregistrées afin qu'elles ne soient pas perdues. Le procédé selon l'invention, appliqué aux domaines particuliers, évoqués au début du présent mémoire, des titres de transport et des bulletins de jeu, non seulement comprend la préparation d'une transaction, puis sa validation, non seulement met en oeuvre une fonction d'inhibition suivie d'une fonction de libération, mais encore synchronise l'opération de validation sur le début, sur le déroulement ou sur la fin de la période d'inhibition. L'opération de libération n'est pas un simple retour à un état initial, mais est une mise à un nouvel état différent de l'état antérieur à l'inhibition.

Ainsi, l'invention met en oeuvre la fonction d'inhibition en contradiction avec les enseignements de l'article précité de IBM Technical Disclosure Bulletin. L'inhibition n'est pas utilisée pour le retour à un état initial, mais au contraire pour la mise à un autre état. Dans un premier cas, l'opération d'inhibition provoque la validation (ticket d'autobus qui est validé dès qu'il est inhibé , les deux opérations étant pratiquement simultanées). Dans un second cas, la validation interrompt l'inhibition (bulletin de jeu dont la validation s'accompagne de l'émission d'un justificatif). Dans un autre cas qui est la combinaison des deux précédents, la validation est très postérieure au début de l'inhibition et très antérieure à la libération (billet de train préparé à l'avance et utilisé comme moyen de preuve).

Pour cette raison, on n'utilise pas le terme "inhibition", dans la suite du présent mémoire, mais l'expression "maintien en l'état" qui indique simplement que l'utilisateur n'a plus la faculté de modifier les paramètres de la transaction.

Plus précisément l'invention concerne un procédé d'exécution de transactions à l'aide d'un support matériel, du type qui comprend la préparation des éléments de la transaction avec le support matériel, la validation de la transaction suivant les éléments préparés et la libération du support matériel; la caractéristique essentielle de l'invention est que ce procédé, après la préparation des éléments de la transaction et avant la libération du support matériel, comprend une opération de maintien du support en l'état pendant un temps indéfini.

La validation peut être réalisée un certain temps après le début de l'opération de maintien, et dans ce cas, l'opération de maintien a essentiellement pour rôle de permettre la conservation des éléments de la transaction entre le moment de l'élaboration et le moment de la validation de celle-ci à un moment qui peut être très postérieur à celui de la préparation. La validation peut aussi être réalisée au début de l'opération de maintien, la validation étant pratiquement simultanée à l'opération de maintien, si bien que le support matériel utilisé peut constituer un moyen de preuve de la transaction, jusqu'à sa libération. La validation peut aussi être réalisée au cours de l'opération de maintien, celle-ci comprenant alors une première phase de verrouillage pendant laquelle les éléments de la transaction sont conservés, bien qu'ils puissent être modifiés à volonté, et une seconde phase dans laquelle les éléments de la transaction qui ont été validés ne peuvent plus être modifiés et le support matériel constitue un moyen de preuve.

L'opération de libération du support matériel, par exemple la suppression de l'inhibition du fonctionnement du microordinateur, peut aussi s'accompagner de l'édition d'un justificatif de la transaction ou d'un moyen de preuve de celle-ci, par exemple d'une facture.

La validation peut aussi comprendre le débit d'un compte, simultanément ou pratiquement simultanément, le compte étant débité d'une somme représentative de la transaction. Ce débit peut être réalisé soit sur un compte déjà approvisionné qui peut être par exemple représenté dans la mémoire du support matériel lorsque celui-ci est un microordinateur. Ce débit peut aussi être une simple inscription utilisée ultérieurement pour le débit d'un compte en banque par exemple. Ce débit peut aussi être assuré par l'intermédiaire d'un appareil de paiement en numéraire, par exemple par des pièces de monnaie, associé à un terminal de validation par exemple.

Lorsque la validation est antérieure d'un certain temps à la libération, le support matériel constituant alors un moyen de preuve, la durée restante de l'opération de maintien peut être limitée, par exemple à une valeur de huit heures ou seize heures.

Lorsque l'opération de maintien comporte une première phase de verrouillage, le déclenchement de l'opération de maintien est de préférence réalisé par une opération volontaire de la personne exécutant la transaction. Au contraire, lorsque le début de l'opération de maintien est proche de l'opération de validation, elle est de préférence simultanée à cette opération de validation.

Lorsque l'opération de validation est réalisée avant la fin de l'opération de maintien du support en l'état, la libération du support matériel est de préférence réalisée volontairement par la personne exécutant la transaction. Lorsque la validation provoque la fin de l'opération de maintien, la validation est de préférence simultanée à l'interruption de l'opération de maintien et elle est alors réalisée automatiquement.

L'invention concerne aussi un microordinateur, du type qui comprend une unité de traitement, un dispositif de saisie, un dispositif d'affichage, un dispositif d'entrée-sortie et une alimentation, destiné à la mise en oeuvre du procédé indiqué précédemment. Ce microordinateur se caractérise en ce qu'il comporte en outre un dispositif de maintien en l'état, destiné à inhiber la transmission de données entre une partie au moins du dispositif de saisie et l'unité de traitement, et un dispositif de libération destiné à supprimer cette inhibition.

Le dispositif de maintien, le dispositif de libération ou ces deux dispositifs peuvent être formés par un dispositif spécialisé, qui s'ajoute au dispositif de saisie. Au contraire, le dispositif de maintien, le dispositif de libération ou ces deux dispositifs peuvent être incorporés au dispositif de saisie. Par exemple, les opérations de maintien et de libération sont commandées par la commande successive de deux touches particulières du dispositif de saisie, dans un ordre bien déterminé.

Dans un mode de réalisation avantageux, le dispositif de maintien ou le dispositif de libération est directement commandé par un appareil extérieur au microordinateur, de préférence l'appareil qui assure la validation des transactions. Par exemple, lorsque le microordinateur doit constituer un moyen de preuve, l'opération de maintien peut être réalisée en même temps que la validation. Au contraire, lorsqu'aucun moyen de preuve n'est nécessaire (soit que la transaction le permette, soit qu'un justificatif soit édité par ailleurs), la suppres sion de l'inhibition est assurée par une opération de validation, par exemple à un terminal de validation.

D'autres caractéristiques et avantages de l'invention ressortiront mieux de la description qui va suivre, faite en référence au dessin annexé sur lequel :

la figure 1 est un diagramme synoptique d'un microordinateur selon l'invention; et

la figure 2 est un schéma plus détaillé d'un élément du microordinateur de la figure 1.

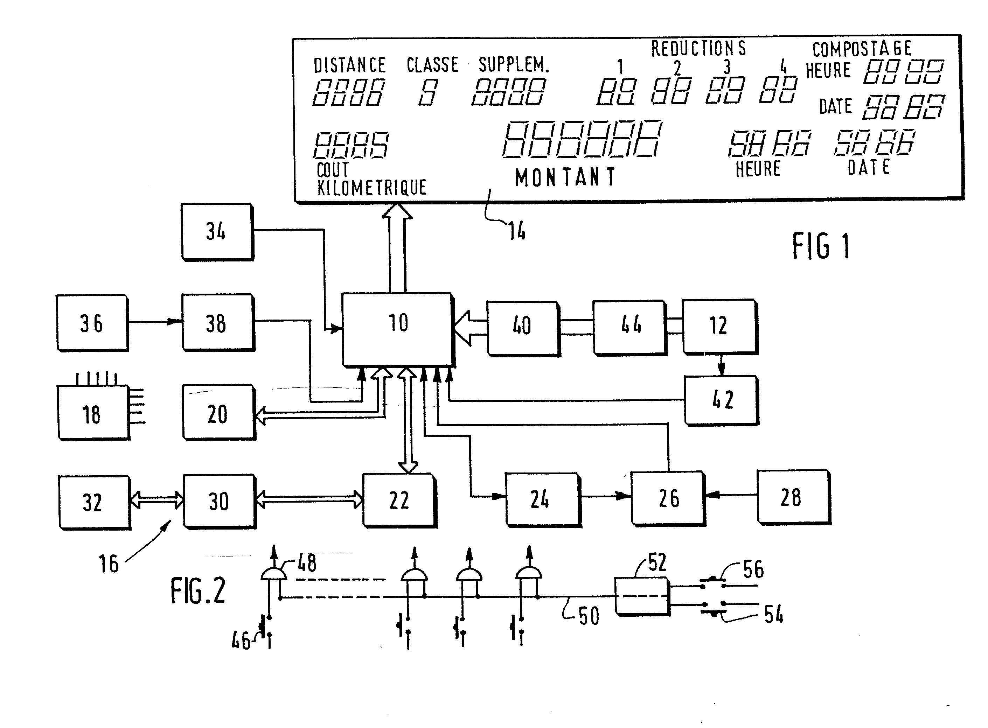

L'exemple décrit plus précisément en référence aux figures 1 et 2 est un microordinateur destiné à constituer une carte de transport de chemin de fer. Physiquement, il a la forme d'une carte de crédit habituelle, ayant une longueur de 86 mm, une largeur de 54 mm et une épaisseur de 0,76 mm. Cependant, comme ces cartes n'existent actuellement qu'à l'état de prototypes, l'invention peut être mise en oeuvre avec un microordinateur de plus grande dimension, par exemple de plus grande épaisseur (étant donné que les piles actuellement disponibles ont une plus grande épaisseur).

Les principaux éléments du microordinateur sont l'unité centrale de traitement 10 autour de laquelle sont articulés tous les éléments du microordinateur. Ainsi, un clavier 12, un dispositif d'affichage 14, un dispositif d'entrée-sortie 16 et une alimentation électrique 18 sont schématiquement représentés. La liaison entre l'alimentation 18 et chacun des éléments consommateurs de courant n'est pas représentée sur la figure mais est bien connue des hommes du métier.

L'unité centrale 10 travaille avec une mémoire 20 qui comprend d'une part une mémoire passive de programme et d'autre part une mémoire à accès direct de données. L'unité de traitement travaille aussi avec une mémoire à accès direct de type permanent. Dans l'application considérée, cette mémoire permanente contient le coût du kilomètre, la réserve financière qui peut être débitée, la composition de la dernière transaction, et de manière générale, des éléments relatifs aux barèmes de prix. L'unité de traitement dispose aussi d'un circuit comprenant essentiellement un circuit générateur de temps 24 et un circuit 26 de comptage de temps, coopérant avec une horloge 28. Ces trois derniers éléments sont importants pour l'indication d'une part du moment de la validation (compostage) et d'autre part de l'heure au moment de l'observation, comme indiqué dans la suite du présent mémoire.

La mémoire permanente est reliée au dispositif d'entrée-sortie 16 qui comprend un circuit 30 d'interface et un connecteur 32. Ces deux éléments sont destinés à permettre des échanges d'informations avec un appareil externe, habituellement un terminal de validation. Celui-ci transmet des indications au microordinateur si bien que, ultérieurement, celui-ci peut être utilisé comme moyen de preuve, la transaction validée étant contenue dans la mémoire à accès direct de type permanent 22 et pouvant être affichée sur le dispositif 24, lorsque la preuve de la transaction doit être apportée. Par ailleurs, ce terminal extérieur reçoit, par l'intermédiaire de l'interface 30 et du connecteur 32, des éléments lui permettant de tenir à jour une comptabilité, des éléments statistiques, etc.

Dans l'application particulière considé rée, le microordinateur comporte en outre une clé de compostage représentée par le circuit 34, et des clés de mise à niveau de la réserve financière, représentées par le circuit 36 qui est relié à l'unité de traitement 10 par un circuit 38 de décodage. Ces différents circuits permettent notamment une protection en cas de perte ou de vol et sont utilisés notamment pour le renouvellement de la réserve financière conservée dans la mémoire permanente 22.

Le dispositif 14 d'affichage est représenté dans un exemple correspondant à un certain barème de prix. Ainsi, il comporte, à la partie supérieure et de gauche à droite, une première zone indiquant la distance relative à la transaction, une seconde zone indiquant la classe de parcours, c'est-à-dire première classe ou seconde classe, puis une zone représentative des suppléments éventuels (trains rapides, couchettes, etc.). Les quatre zones suivantes indiquent des pourcentages de réduction correspondant au maximum à quatre voyageurs qui peuvent voyager ensemble avec un même titre de transport constitué par le microordinateur. Les deux zones superposées de droite indiquent l'heure et la date de compostage. La ligne suivante indique, dans une première zone, le coût du kilomètre. La zone suivante indique le montant de la transaction, c'est-à-dire le prix du billet. Les deux zones suivantes indiquent l'heure et la date du moment considéré.

Bien entendu, il ne s'agit que d'un exemple. Certains éléments peuvent être supprimés dans des modèles plus simples et d'autres éléments peuvent au contraire être ajoutés pour des cas particuliers, notamment indiquant la durée de validité du billet, etc.

Le clavier constituant le dispositif de saisie 12 comporte un certain nombre de touches qui transmettent des signaux à l'unité 10 de traitement par l'intermédiaire d'un circuit 40 d'interface de type classique. Un circuit 42 représente un circuit logique de mise en service utilisé lors de la mise sous tension du microordinateur. Le circuit 44 est un circuit spécifique à l'invention et on le décrit dans la suite du présent mémoire en référence à la figure 2, après la description du clavier.

Le clavier 12 comporte avantageusement dix touches numériques et un certain nombre de touches de fonction. Celles-ci peuvent être représentatives par exemple de la distance parcourue, de la classe de transport, des suppléments, des réductions, de l'indication que plusieurs voyageurs sont impliqués dans la transaction, de mise en service, de mise hors service, d'effacement de la totalité ou d'une partie des éléments affichés, du coût du kilomètre, etc. Des touches supplémentaires peuvent être utilisées pour la mise à l'heure et la mise à la date. Enfin, dans un certain mode de réalisation, une touche supplémentaire ou un commutateur est utilisé pour l'opération de déclenchement de l'opération de maintien en l'état.

La figure 2 représente un exemple de réalisation du circuit 44. Les touches 46 du clavier 12 sont reliées à l'interface 40 par l'intermédiaire de portes ET 48 à deux entrées, chaque touche étant reliée à une première entrée de la porte correspondante et toutes les secondes entrées étant reliées par un fil 50 à un circuit 52 de validation sous forme d'un basculeur commandé par deux touches 54 et 56, l'une commandant l'inhibition et l'autre supprimant l'inhibition du fonctionnement du clavier. Dans ce cas, le clavier 12 comporte non seulement les touches 46 mais aussi deux touches correspondant aux références 54 et 56. Il s'agit donc d'un mode de réalisation dans lequel l'inhibition du fonctionnement du clavier est assurée par des touches spécifiques qui, bien qu'associées au clavier, ne font pas partie du dispositif de saisie proprement dit mais constituent un dispositif de maintien en l'état et de libération pour le microordinateur.

Bien qu'on ait représenté un mode de réalisation dans lequel les fonctions de maintien et de libération sont commandées par deux touches, l'opération peut être assurée par un seul commutateur déplacé entre deux positions. Elle peut aussi être assurée plus simplement à partir de touches du clavier, manoeuvrées d'une manière codée. Par exemple, l'enfoncement dans un ordre déterminé de deux ou trois touches de fonction ou même de fonction et numériques, peut provoquer le maintien du microordinateur en l'état ou au contraire, la libération du procédé selon l'invention. Bien d'autres possibilités existent qui entrent toutes dans le cadre de l'invention.

On considère maintenant l'utilisation d'un tel microordinateur par un voyageur. Celui-ci, longtemps avant son voyage ou juste avant, met en service le microordinateur et peut par exemple d'abord demander le montant de sa réserve financière. Il indique alors successivement la distance qu'il souhaite parcourir, en fonction de sa destination et de sa gare de départ, la classe de transport, les suppléments et réductions éventuels et d'autres éléments le cas échéant. Le coût du kilomètre est affiché à partir de la mémoire permanente. Le microordi nateur calcule donc montant qu'il affiche. Ce montant peut être représenté sous forme clignotante lorsqu'il est supérieur à la réserve financière par exemple. Lorsque le voyageur a préparé les éléments d'une transaction sur son dispositif d'affichage, il ne souhaite pas que ces éléments soient modifiés. En effet, il a pu avoir certaines difficultés à se procurer ces éléments, par exemple à connaître exactement la distance de parcours, à se procurer des caractéristiques propres à certains trains qu'il souhaite utiliser, etc. Il est donc primordial que le voyageur puisse maintenir le microordinateur en l'état sans qu'une modification ultérieure intempestive soit possible. A cet effet, il commande la touche 54 d'inhibition. Il sait alors que le microordinateur gardera tous les éléments de la transaction jusqu'au moment de la validation. Celle-ci peut être effectuée juste avant la montée du voyageur dans le train. De cette manière, le voyageur a pu préparer à tête reposée sa transaction, s'assurer qu'il pouvait effectivement l'effectuer, et la faire valider juste avant le transport lui-même. Si, avant la validation, le voyageur veut modifier les éléments, il peut le faire par l'utilisation de la touche 56.

Lorsque les éléments de la transaction ont été validés, le microordinateur ne peut plus être utilisé autrement que comme moyen de preuve de cette transaction. Tant que le voyageur souhaite disposer de ce moyen de preuve, c'est-à-dire au moins jusqu'à l'arrivée à la gare de destination, il doit conserver le microordinateur afin de pouvoir le présenter à tout contrôle. Par contre, à partir du moment où il est arrivé à destination, il peut remettre en circuit le microordinateur, par exemple par introduction d'une séquence codée par le clavier.

L'opération de libération peut aussi être réalisée autrement. Par exemple, des terminaux spécialisés, associés par exemple aux terminaux de validation, peuvent automatiquement éditer une "facture" qui est un simple justiticatif de paiement. Dans une variante, cette facture peut être éditée au moment de la validation, la "facture" tenant alors lieu de titre de transport, c'est-à-dire de moyen de preuve. Dans ce cas, le microordinateur peut être réutilisé immédiatement pour la composition d'autres billets le cas échéant. De toute manière, l'immobilisation à un terminal est très brève si bien que les voyageurs n'ont pas à faire la queue.

On a décrit un mode de réalisation dans lequel les éléments de la transaction sont préparés à l'avance puis conservés un certain temps avant la validation et même après celle-ci, dans une variante. Il peut cependant arriver que cette conservation préalable ne soit pas nécessaire. Par exemple, lorsque les microordinateurs sont utilisés comme titres de transport d'un réseau urbain, la préparation des éléments de la transaction peut être très simple et peut par exemple se limiter à l'enfoncement d'une seule touche. Dans ce cas, il n'est pas nécessaire que l'opération de maintien en l'état du microordinateur commence longtemps avant la validation. La mise à l'état de maintien assure la validation et le microordinateur reste ainsi à l'état maintenu ou inhibé jusq'à ce que l'utilisateur libère le microordinateur. Pendant toute la période de maintien se terminant à la validation et la libération, le microordinateur joue le rôle d'un moyen de preuve de l'exécution de la transaction.

Dans cette dernière application, le microordinateur est une simple carte ayant un écran d'affichage et une seule touche. L'enfoncement successif de la touche unique fait progresser un nombre sur l'écran, par exemple le nombre de sections, avec retour à 1 après affichage du nombre maximal. Lorsque celui-ci est affiché, la carte est introduite dans l'appareil de mise à l'état de maintien et de validation dit "composteur" qui fait apparaître sur l'écran un signe indiquant ce compostage, par exemple la date et l'heure de compostage, le code du véhicule emprunté ou toute autre indication permettant d'éviter une réutilisation du titre de transport au-delà d'une période déterminée de validité. Toute modification de l'affichage est interdite sans libération, c'est-à-dire sans disparition du moyen de preuve. Cette libération peut être commandée par l'utilisateur ou effectuée dans un appareil spécial.

On considère maintenant l'application de l'invention à des jeux tels que le loto de la Loterie Nationale ou le tiercé ou le quarté du Pari Mutuel Urbain. Dans tous ces jeux, il existe de nombreuses possibilités (paris ou pronostics multiples, tirages multiples, combinaisons différentes, etc.). Le clavier doit donc comporter des touches numériques pour la désignation des éléments du jeu et des touches de fonction pour la sélection du jeu particulier choisi.

On considère un premier cas, celui du loto dans lequel le microordinateur du joueur ne constitue pas un moyen de preuve. Le joueur prépare d'abord à tête reposée les éléments de la transaction. Il peut se trouver par exemple chez lui, en présence de journaux sportifs afin de préparer son pronostic. Lorsqu'il a préparé tous les éléments de la transaction, il appuie sur le bouton d'inhibition assurant le maintien en l'état du microordinateur. Ensuite, au moment le plus commode, il se rend à un terminal de validation et fait valider en quelques seconds les éléments de la transaction. Lorsque le microordinateur comporte une réserve financière, l'opération est entièrement automatique. Par contre, si le microordinateur n'a pas une telle réserve financière, le joueur doit par exemple introduire le montant de sa mise à l'aide d'un monnayeur associé au terminal. Ce dernier édite alors un justificatif constituant le moyen de preuve.

Dans une variante, le moyen de preuve est constitué par le microordinateur lui-même. Dans ce cas, le microordinateur ne peut plus être utilisé avant libération. Cette libération est réalisée alors par le joueur lui-même, qui introduit le code de libération lorsque, au vu des résultats, il se rend compte qu'il n'a aucun gain, ou elle peut être réalisée par un organisme certificateur ou payeur, lorsque le joueur présente son microordinateur comme moyen de preuve pour toucher ses gains éventuels.

Ainsi, l'invention concerne un procédé et un microordinateur ayant de nombreuses applications qui nécessitent toutes une période de maintien en l'état du microordinateur, pendant laquelle est réalisée l'opération de validation. L'une au moins des opérations de déclenchement du maintien en l'état ou de libération à partir de cet état est réalisée volontairement par l'utilisateur. Par contre, l'opération de validation de la transaction est toujours réalisée d'une manière au moins partiellement automatique afin qu'elle puisse être prise en compte par le partenaire de la transaction.

## Revendications

1. Procédé d'exécution de transactions à l'aide d'un support matériel, du type qui comprend :
- la préparation des éléments de la transaction à l'aide du support matériel, et
- la validation de la transaction en fonction des éléments préparés,
caractérisé en ce qu'il comprend, après la préparation des éléments de la transaction, une opération de maintien du support en l'état pendant un temps indéfini, puis la libération du support matériel de cet état.

2. Procédé selon la revendication 1, caractérisé en ce que l'opération de validation termine l'opération de maintien en l'état.

3. Procédé selon la revendication 1, caractérisé en ce que le déclenchement de l'opération de maintien en l'état provoque la validation.

4. Procédé selon la revendication 1, caractérisé en ce que l'opération de validation est réalisée au cours du maintien en l'état.

5. Procédé selon l'une quelconque des revendications 1 à 4, caractérisé en ce que la libération s'accompagne en outre de l'édition d'un justificatif de la transaction.

6. Procédé selon l'une quelconque des revendications 1 à 5, caractérisé en ce que la validation comprend simultanément le débit d'une somme représentative de la transaction.

7. Microordinateur, du type qui comprend
- une unité de traitement (10),
- un dispositif de saisie (12),
- un dispositif d'affichage (14),
- un dispositif d'entrée-sortie (16), et
- une alimentation (18),
ledit microordinateur étant destiné à la mise en oeuvre d'un procédé selon l'une quelconque des revendications 1 à 6, caractérisé en ce qu'il comporte en outre
- un dispositif de maintien en l'état, destiné à inhiber la transmission de données d'une partie au moins du dispositif de saisie à l'unité de traitement, et
- un dispositif de libération destiné à supprimer cette inhibition.

8. Microordinateur selon la revendication 7, caractérisé en ce que l'un au moins des dispositifs de maintien et de libération est constitué par un dispositif spécialisé, s'ajoutant au dispositif de saisie.

9. Microordinateur selon l'une des revendications 7 et 8, caractérisé en ce que l'un au moins des dispositifs de maintien et de libération est constitué par une partie du dispositif de saisie.

10. Microordinateur selon l'une quelconque des revendications 7 à 9, caractérisé en ce que soit le dispositif de maintien, soit le dispositif de libération est commandé directement par un appareil extérieur au microordinateur.

DISTANCE    CLASSE    SUPPLEM.              REDUCTIONS              COMPOSTAGE
                                        1       2      3      4    HEURE
                                       88     88    88    88
                                                                  DATE

COUT
KILOMETRIQUE              MONTANT                      HEURE       DATE

FIG 1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | EP-A-0 057 602 (HALMERS et al.) * Abrégé; page 1, lignes 12-36; revendications; figures * | 1,7 | G 07 F    7/08 <br> G 07 B   15/00 <br> G 07 C   15/00 |
| A | US-A-4 323 770 (DIEULOT et al.) * Abrégé; revendications; figures * | 1,5,7 | |
| A,D | IBM TECHNICAL DISCLOSURE BULLETIN, vol. 27, no. 4A, Septembre 1984, page 1999, New York, US; G.C. CHUI et al.: "Keyboard inhibit mode for electronic typewriter" * En entier * | 1,7 | |
| A,D | DE-A-3 222 288 (WEISE) * Abrégé; revendications; figures * | 1,7 | DOMAINES TECHNIQUES RECHERCHES (Int. Cl.4) |
| A,D | GB-A-2 066 540 (LETHABY) * Abrégé; revendications * | 1,7 | G 07 B <br> G 07 F <br> G 07 C <br> G 06 K <br> G 06 F |
| A,D | US-A-4 320 387 (POWELL) * Abrégé; revendications; figures * | 1,7 | |
| A,D | EP-A-0 038 425 (PORST) * Abrégé; page 8, ligne 6 - page 10, ligne 20; figures * | 1,7 | |
| | --- -/- | | |

Le présent rapport de recherche a été établi pour toutes les revendications

| Lieu de la recherche | Date d'achèvement de la recherche | Examinateur |
|---|---|---|
| LA HAYE | 07-07-1987 | MEYL D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

## RAPPORT DE RECHERCHE EUROPEENNE

Office européen
des brevets

Numéro de la demande

EP 87 40 0698

Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 058 029 (HALPERN et al.) | | |
| | --- | | |
| A | US-A-4 460 965 (TREHN et al.) | | |
| | ----- | | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 07-07-1987 | MEYL D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82